# EUROPEAN PATENT SPECIFICATION

(11) **EP 0 341 937 B1**
(45) Date of publication and mention of the grant of the patent: **05.02.1997**
(21) Application number: 89304589.8
(22) Date of filing: 05.05.1989
(51) Int. Cl.: B32B 27/00, B32B 27/10, B65D 65/40

(54) **Oxygen impermeable leak free container**
Sauerstoffundurchlässiger leckagefreier Behälter
Récipient sans fuites et imperméable à l'oxygène

(30) Priority: 09.05.1988 US 191987; 09.05.1988 US 191988; 09.05.1988 US 191992; 09.05.1988 US 191337; 09.05.1988 US 191989
(43) Date of publication of application: 15.11.1989
(73) Proprietor: INTERNATIONAL PAPER COMPANY, Purchase New York 10577 (US)
(72) Inventor: Gibbons, Charles E., Mobile Alabama 36609 (US); Marano, Gerald A., Mobile Alabama 36695 (US); Kittrel, James M., Mobile&Alabama 36609 (US); Whillock, Allan A., Mobile&Mobile County Alabama (US); Lanham, Robert L., Mobile&Alabama 36608 (US); Evans, Donald, South Mobile Alabama 36608 (US)
(74) Representative: Seaborn, George Stephen

(56) References cited:
- EP-A- 0 109 465
- EP-A- 0 159 609
- EP-A- 0 236 099
- US-A- 3 972 467
- US-A- 4 489 112

## Description

### BACKGROUND OF THE INVENTION

The invention relates to a heat-sealable barrier laminate structure which produces an oxygen impermeable, leak free container. More particularly, this invention relates to barrier laminate structures which are comprised of specific high strength polymer resin layers which effectively prevent heat activation pinholes, cuts or cracking of oxygen barrier layers caused during scoring and especially during folding and heat sealing of the laminate in package formation.

Heat-sealable low density polyethylenes are well known to be components of current paperboard food and/or non-food packages which provide little barrier to the transmission of oxygen. Pinholes, cuts, score lines or channels, existent in conventional packaging and cartons, create additional leakage sites. It is well known that impermeable materials such as aluminum foil, polar brittle materials such as: polyacrylonitriles, polyvinylidene chlorides, polyvinyl chlorides, etc., provide varying degrees of barrier to the transfer of oxygen. However, all these materials lack the requisite strength at high rates of deformation, namely stress cracking resistance during scoring, package formation and distribution abuse to provide a resultant oxygen impermeable and airtight structure. In addition, leakage through the uncaulked channels of the carton in the top, bottom and side seam have likewise resulted in poor whole carton oxygen barrier properties.

The existing commercial structures for a paperboard carton for liquid and solid, food and non-food, products have utilized an easily heat-sealable barrier laminate composed of a paperboard substrate and a foil oxygen barrier layer, both being sandwiched between two thick layers of low density polyethylene (LDPE). The LDPE is a relatively inexpensive heat-sealable moisture barrier material. The conventional structure falters in that the foil layer which acts as the barrier to the transmission of oxygen in and out of the carton cracks during blank conversion, carton formation, and package distribution stages.

Bending and folding occurring during the formation of a gable "type" top, flat "type" top, or other folded, heat-sealed top closure, and a fin-sealed, or other conventional folded bottom puts excessive amounts of local stress on the thin foil and/or other oxygen barrier layer and, as typically results, cracks and pinholes appear.

USP 3,972,467 describes the disadvantages of containers consisting of a paperboard substrate coated on both sides with polyethylene, namely the liquid seeps through in the weakened areas where the paperboard has been scored, folded or flexed and then to substantial portions of the paperboard substrate. Another drawback is that the polyethylene does not provide sufficient barrier against the loss of aromatic oils and flavor components and allows penetration of oxygen. The use of an aluminum foil has provided some improvement but the aluminum cracks during scoring and folding. This patent describes two embodiments. In the first embodiment, shown in Fig. 1, a paper substrate 12 coated on one side with a low density polyethylene layer 11 and on the other side with another layer 13 of a polyolefin. A polyamide layer 14 is adjacent to the layer 13 and another layer 15 of low density polyethylene is bonded to the other surface of layer 14. In the embodiment of Fig. 2 of this patent, the laminate essentially consists of layers 21, 22, 23, 24 and 27 which are the same as layers 11, 12, 13, 14 and 15 as in the first embodiment. It, however, contains an additional layer 25 of an adhesive material and an aluminum layer 26 in contact with layer 27.

To date, there have been no economically attractive commercially available paperboard packages which consistently approach the oxygen impermeability of glass or metal containers. The object of the present invention is to produce an oxygen impermeable, leak free container and/or laminate structure such as a paperboard based package or carton that prevents the transmission of gases therethrough, and in addition, prevents the escape of flavor components or the ingress of contaminates. A further object of the present invention is to produce such a package that is economical on a per-package cost basis, is fundamentally compatible with existing converting machinery and can be formed, filled and sealed at economically high speeds using conventional packaging machine temperatures, pressures and dwell times.

Another object of the present invention is to Provide this oxygen impermeable package in a variety of applications including four-ounce to 128-ounce containers, or larger, as required by the packager.

A further object of this invention is to incorporate a functional polymer layer which exhibits high strength, abuse resistance and toughness during converting and carton forming in combination with aluminum foil or other oxygen barrier layers and paper, paperboard or other mechanically stable structural material such that the high-strength layer reduces the stresses incurred by the barrier layers during blank conversion, package formation, and distribution. Additionally, should a penetration of the barrier layer or layers occur, the high-strength layer serves to maintain package integrity at the failure site. The high-strength, heat-resistant layer effectively prevents heat activation pinholes through the product contact layer, even when non-foil barrier layers are used.

### SUMMARY OF THE INVENTION

A preferred embodiment of the invention reveals an oxygen impermeable leak free barrier laminate, side-seamed blank and/or container providing a total barrier to the loss of essential food flavor oils or non-food components over an extended product shelf-life as well as an absolute barrier to the transmission of oxygen during the same extended shelf-life period. A preferred embodiment of the laminate structure comprises, from the outer surface to the inner surface, contacting the essential oils, flavors and/or components of food or non-food products: an exterior layer of a low density polyethylene, a mechanically stable structural substrate, such as a paper or paperboard material, a corrugated board, or a stiff polymer resin material such as high density polyethylene, polypropylene or the like, a co-extruded interior layer of an abuse resistant polymer such as a polyamide type polymer (nylon 6) and a caulking polymer resin such as an ionomer type resin (Surlyn®1652), an oxygen barrier layer such as an aluminum foil layer, a second layer of a caulking polymer resin such as an ionomer type polymer (Surlyn®1652), and a layer of low density polyethylene in contact with the food or non-food product rendering the laminate structure heat-sealable.

The cartons, side-seamed blanks, or containers constructed of the laminate of the present invention enable significant containment of gases in the container as well as preventing any migration of oxygen or contaminants into the structure. The present invention has produced a suitable container which has the ultimate barrier properties. It utilizes a laminate which can be heat-sealed easily with its exterior and interior layers being like, non-polar constituents. During the heat-seal processes, the scoring processes, the side-seaming processes, and the folding, forming and filling steps, the particular caulking polymer resins, namely ionomer type resins, ethylene acrylic acid copolymers, ethylene methacrylic acid copolymers, ethylene vinyl acetate copolymers, ethylene methylacrylate copolymers and the like have melt indexes which allow them to flow during the heat-sealing processes (temperatures ranging from 121°C - 260°C (250°F-500°F)). The particular selected resins act as a caulking agent to fill the channels produced during formation of the gable, or other type flat top, the fin-sealed, or other conventional type bottom and the skived side seam. Consequently, each of those gap areas is caulked to prevent the transmission of oxygen therethrough. In addition, the selection of the particular abuse resistant polymer, namely polyamide type polymers, polyester type polymers and ethylene vinyl alcohol copolymers or the like acts to prevent any type of significant deformation damage to the foil or other oxygen barrier layer which would result in a crack or pinhole allowing for the seepage of oxygen therethrough.

The preferred package structures formed from the preferred novel laminates of the present invention not only exhibit these novel oxygen impermeable and/or other high barrier properties, but the novel laminate structures are produced using conventional coextrusion coating equipment.

The novel laminate structure and materials selected therefor, namely the particular caulking polymer resins and abuse resistant polymer resins contemplated by the present invention, coupled with oxygen, impermeable or high oxygen barrier materials, in various combinations, can be utilized in a variety of food or non-food packaging applications.

In one application, the preferred laminate structure is produced using conventional coextrusion coating equipment.

Secondly, this laminate is printed and forwarded through scoring dies and cutting dies to create flat blanks which are placed on conventional machinery for further preparation.

Thirdly, these flat blanks are skived and folded and side-seamed to create the side-seamed blanks. During the heat-sealing step of the side-seam operation, the resins which have been selected for their particular melt flow characteristics, caulk and seal along the seam. Resins which have melt flow indexes ranging from 4.5 - 14.0 are preferred. These side-seamed blanks are then forwarded to the particular customer for further assemblage.

Fourth, these side-seamed blanks are magazine fed into a machine wherein they are opened and placed on a mandrel, wherein sealing of the bottom takes place.

Typically, the bottom folding and sealing is where most of the damage to the interior thin barrier foil layer occurs in conventional cartons. Utilization of a particular strong polymer resin, comprising an abuse resistant polymer, such as a polyamide type polymer, prevents cracking of the foil layer during the bottom sealing process. The bottom is fully heat-sealed into a flat configuration at which time caulking polymer resins, such as ionomer resins, flow in a caulking manner to seal the bottom. The container or package is then forwarded to the filling step. Next, the top is "prebroken" and filled with the particular product and then top-sealed. Again, much damage is done to the foil or other barrier layer during this top-sealing process of conventional cartons. The utilization of the novel abuse resistant and caulking polymer resin constituents in the barrier laminate acts to prevent any damage to the foil or non-foil barrier layer and produce a top closure which has been caulked to doubly prevent any transport of oxygen.

The novel barrier laminate produced by the present invention not only exhibits excellent oxygen barrier properties and can be easily constructed, but also meets FDA approval for use in food packaging. The resins heat seal at low temperatures 121°C - 260°C (250°F to 500°F) and the structures can be converted and cut on conventional machinery.

Thus, until the advent of the present invention, no suitable oxygen impermeable, leak free containers or packages have been developed which retain the advantages of using mechanically stable structural substrates such as paperboard or the like as the base material and FDA approved heat-sealable barrier layers which are economical and can be produced using conventional coextrusion coating equipment.

The present invention described herein is particularly useful as a coated paperboard structure employed in the packaging of food and non-food products. These types of containers make use of a heat-seal for seaming and closing, and are utilized in the formation of folding boxes, square rectangular cartons or containers, or even cylindrical tubes.

In addition, the novel combinations of caulking polymer resins, abuse resistant polymers and oxygen impermeable and/or high oxygen barrier materials have other applications as well.

Namely, the combination of high oxygen barrier materials such as ethylene vinyl alcohol copolymers or other brittle oxygen barrier materials coupled with abuse resistant type polymer resins such as polyamide type polymers or the like, have applications in combination with almost any mechanically stable structural substrate. Particularly, multilayer blow-molded containers incorporating abuse resistant polymer resins in combination with high oxygen barrier materials is one of the novel applications of this invention.

One specific example of such an application is the utilization of ethylene vinyl alcohol copolymer in combination with a polyamide type polymer mounted on a high density polyethylene structural substrate. The polyamide type polymer acts to protect the brittle ethylene vinyl alcohol copolymer oxygen barrier layer from abuse during shipping and transport of the overall container structure.

### BRIEF DESCRIPTION OF THE DRAWINGS

FIG. 1 is a cross-sectional elevation of the preferred embodiment of the laminate of the present invention;
FIG. 2 is a cross-sectional elevation of an alternate embodiment of the laminate of the present invention;
FIG. 3 is a cross-sectional elevation of an alternate embodiment of the laminate;
FIG. 4 is a cross-sectional elevation of an alternate embodiment of the laminate; and
FIG. 5 is a cross-sectional elevation of an alternate embodiment of the laminate.

### DETAILED DESCRIPTION OF THE INVENTION

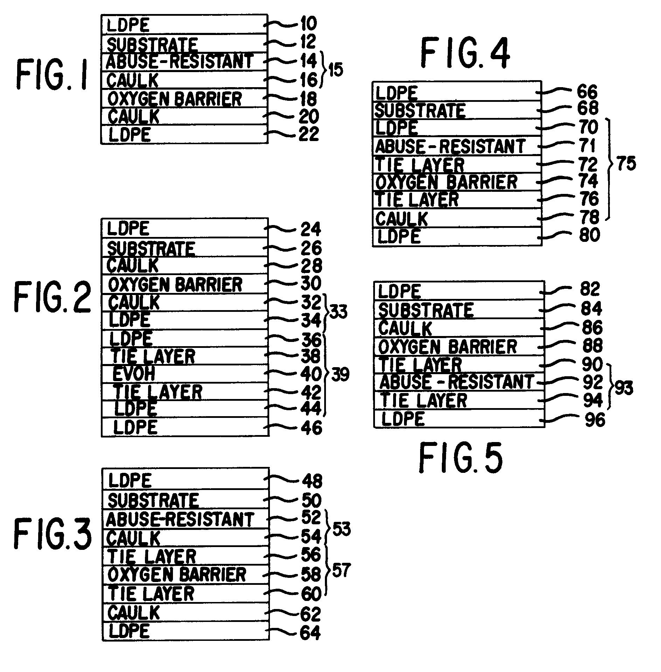

The preferred embodiment of the invention is for a hermetic, oxygen impermeable leak free and/or high oxygen barrier leak free package incorporating a laminate structure as disclosed in FIG. 1. All weights given for particular laminate layers are expressed in kg/sq cm (pounds per 3,000 square feet). Disclosed is a mechanically stable structural substrate 12 which is most suitably high grade paperboard stock, for example 90-135 kg (200-300 lbs.) or higher sized carton board, to which is applied on one side a coating of a low density polyethylene polymer 10 in a coating weight of about 9 kg (20 lbs.) Layer 10 is the "gloss" layer which contacts the outer atmosphere. An extrusion coating grade LDPE having a melt flow index ranging from 4.0 to 7.0 is suitable for use herein. On the underside or interior portion of the paperboard substrate 12 is coextruded thereon a combined layer of an abuse resistant polymer resin such as a polyamide type polymer (nylon 6), 14, in a coating weight of about 3.17 kg (7.5 lbs.), with a caulking polymer resin such as an ionomer type resin (Surlyn® 1652), 16, in a coating weight of about 2.47 kg (5.5 lbs.) Laminated thereon is an absolute oxygen impermeable material or a high oxygen barrier material, such as a 0.007-0.0125 mm (0.000285-0.0005 inch) layer of aluminum foil 18. Coated on the outer layer of the foil is a second layer of a caulking polymer resin such as an ionomer type resin (Surlyn® 1652), 20, in a coating weight of about 2.2 kg (5 lbs.), and lastly coated thereon is a second layer of a low density polyethylene polymer 22, in a coating weight of about 9 kg (20 lbs.) rendering the entire laminate structure heat sealable on conventional heat-seal equipment at conventional heat-seal temperatures (250°F-500°F).

Referring to FIG. 2, an alternate preferred embodiment of the laminate of the present invention is shown. The embodiment adds additional layers of low density polyethylene (LDPE) as well as a layer of ethylene vinyl alcohol copolymer (EVOH) which provides additional barrier protection to the overall container structure. In this alternate preferred embodiment, the mechanically stable structural substrate 26, such as a paperboard substrate, having a weight of 90 kg-135 kg (200-300 lbs.) or higher for a 1.1 liter (quart), 1.89 liter (half-gallon), 3.78 liter (gallon) or larger structures, has extrusion coated on its external surface a 10.8 kg (24 lb.) layer of a low density polyethylene polymer 24. On the internal surface of the mechanically stable structural substrate 26, is applied a 4.9 kg (12 lb.) coating of a caulking polymer resin such as an ionomer type resin (Surlyn® 1652), 28. Laminated thereon is a 0.007-0.0125 mm (0.000285-0.0005 inch) layer of an oxygen barrier material (aluminum foil) 30. Coextruded onto the exposed surface of the foil 30 is a sandwich 33 comprising a 4.05 kg (9 lb.) layer of a caulking polymer resin such as an ionomer type resin (Surlyn® 1652), 32, and a 1.35 kg (3 lb.) layer of a low density polyethylene polymer 34. Coated onto the first coextruded sandwich layer 33 is a second coextruded layer 39 comprising from interior contacting layer 33 to exterior, a 4.5 kg (10 lb.) layer of a low density polyethylene polymer 36, a 0.9 kg (2 lb.) adhesive tie layer, such as a Plexar 177®, 38, a 4.9 kg (12 lb.) layer of an ethylene vinyl alcohol copolymer, such as EVAL SCLE 105B, 40, a second 0.9 kg (2 lb.) adhesive tie layer, such as a Plexar 177®, 42, and an exterior 4.5 kg (10 lb.) layer of a low density polyethylene polymer 44. Finally, coated thereon, is a 9.9 kg (22 lb.) layer of a low density polyethylene polymer 46 which in combination with layer 24 renders the entire laminate structure heat sealable.

FIG. 3 is a modified version of the alternate preferred embodiment outlined in FIG.2 dropping various interior layers of low density polyethylene. The structure is described as follows: a mechanically stable structural substrate such as a paperboard layer having a weight of 90 kg-135 kg (200-300 lbs.), or higher, 50 is coated on its exterior with a layer of 9 kg (20 lbs.) of a low density polyethylene polymer 48. On the interior side of the mechanically stable structural substrate 50 is a coextruded sandwich 53 comprised of a 3:15 kg (7 lb.) layer of an abuse resistant polymer such as a polyamide type polymer (nylon 6), 52, and a 1.8 kg (4 lb.) layer of a caulking polymer resin such as an ionomer resin (Surlyn® 1652), 54. An adhesive tie layer, such as Plexar 177®, 56, having a weight of 1.57 kg (3.5 lbs.), an oxygen barrier layer, such as an aluminum foil having a thickness of 0.007-0.0125 mm (0.000285-0.0005 inches), 58, which acts as an absolute barrier to the transmission of oxygen and a second adhesive tie layer, such as a Plexar 177®, 60, in a weight of 1.57 kg (3.5 lbs.) are all coextruded onto said coextruded sandwich 53. Finally, a 11.25 kg (25 lb.) layer of a caulking polymer resin such as an ionomer resin (Surlyn® 1652), 62, is coated onto the second coextruded sandwich 57 and an interior food contact layer of low density polyethylene 64 having a weight of 0.9 kg (2 lbs.) is placed thereon. The addition of layer 64 in combination with layer 48 allows for a better heat seal between the outer and inner layers.

Referring to FIG. 4, another preferred embodiment of the invention is disclosed. A mechanically stable structural substrate such as a paperboard substrate having a weight of 90 kg-135 kg (200-300 lbs.), or higher, 68 is coated with a 10.8 kg (24 lb.) layer of a low density polyethylene polymer on its exterior 66. On the interior layer of the substrate 68 is coextruded the following laminate structure 75: a 10.5 kg (10 lb.) layer of low density polyethylene 70, a 4.9 kg (12 lb.) layer of an abuse resistant polymer resin such as a polyamide type polymer (nylon 6), 71, a 0.9 kg (2 lb.) adhesive tie layer, such as a Plexar 177®, 72, an oxygen impermeable layer such as an aluminum foil layer having a thickness of 0.007-0.0125 mm (0.000285-0.0005 inches), 74, a second 0.9 kg (2 lb.) adhesive tie layer such as Plexar 177®, 76, and a 4.5 kg (10 lb.) layer of a caulking polymer resin, such as (Surlyn® 1652), 78. Finally coated onto the coextruded layer is a 9.9 kg (22 lb.) layer of low density polyethylene 80 which in combination with layer 66 allows for the final heat-sealable uniform homogeneous laminate structure.

Referring to FIG. 5, an alternate preferred embodiment of the invention is depicted as follows: a mechanically stable structural substrate such as a paperboard substrate having a weight of 90 kg-135 kg (200-300 lbs.), or higher, 84 has coated on its exterior a 10.8 kg (24 lb.) layer of a low density polyethylene polymer 82. On its interior, a 4.9 kg (12 lb.) layer of a caulking polymer such as an ionomer type resin (Surlyn® 1652), 86, is coated thereon. Laminated onto said caulking polymer layer, 86, is a 0.007-0.0125 mm (0.000285-0.0005 inch) oxygen barrier layer (aluminum foil) 88. Coextruded on the interior portion of the aluminium foil layer 88 is a sandwich 93 of 1.8 kg (4 lbs.), an adhesive tie layer, such as Plexar® 177, 90, 3.15 kg (7lbs.) of an abuse resistant polymer such as a polyamide type resin (nylon 6), 92, and 1.8 kg (4 lbs.) of a second adhesive tie layer such as Plexar ® 177, 94. Lastly, coated on the interior portion of the laminate sandwich 93 is a 11.25 kg (25 lb.) layer of a low density polyethylene polymer 96, to render the laminate structure heat sealable.

Although specific coating techniques have been described, any appropriate technique for applying the layers onto the mechanically stable structural substrate can be suitably employed, such as extrusion, coextrusion or adhesive lamination of single layer and/or multilayer films to the mechanically stable structural substrate to achieve the stated intentions of this patent. The unique effect provided by the oxygen impermeable, leak free packages made from the laminate of the present invention is clearly demonstrated by the following Examples outlined in Table **I**. The preferred embodiment of the present invention is listed as the "International Paper oxygen impermeable 1.89 liters (half-gallon)" and utilizes as the mechanically stable structural substrate a 126.9 kg (282 lb.) layer of paperboard. The preferred structure is compared in Table **I** to a variety of commercial paperboard based and non-paperboard based containers currently available in the market place and recommended for extended shelf-life applications.

**TABLE I**

| Average Whole Container Oxygen Transmission Rates (OTR) | | |
|---|---|---|
| Container | Avg., CC O₂/Pkg./Day 24°C ((75°F), 50% RH, in Air) | OTR (CC/M²/Day) To Fill -Volume (ml) Ratio* |
| INTERNATIONAL PAPER (OXYGEN IMPERMEABLE 1,89 liters (HALF-GALLON) | 0.000 | 0.000 |
| TOPPAN, EP-PAK (1500 ml) WITH PLASTIC FITMENT | 0.005 | 0.004 |
| INTERNATIONAL PAPER ASEPTIC (250 ml.) | 0.016 | 0.2 |
| TETRA BRIK-PAK (250 ml.) | 0.013 | 0.2 |
| CAPRI-SUN POUCH (200 ml.) | 0.01 | 0.3 |
| TREESWEET COMPOSITE FIBER CAN (1360 ml.) | 0.29 | 0.4 |
| CONOFFAST CUP (250 ml.) | 0.022 | 0.4 |
| INTERNATINAL PAPER HOT FILL (2000 ml.) | 1.11 | 0.5 |
| GALLON HDPE (BLOW MOLDED BOTTLE) | 2.75 | 0.5 |
| HALF-GALLON HDPE (BLOW MOLDED BOTTLE) | 1.98 | 1.1 |
| HYPAPAK (700 ml.) | 0.52 | 1.7 |
| HAWAIAN PUNCH COMPOSITE CAN (236 ml.) | 0.09 | 2.0 |
| COMBIBLOCK (250 ml.) | 0.21 | 3.2 |
| JUICE BOWL COMPOSITE CAN (355 ml.) | 0.34 | 4.1 |

| | | |
|---|---|---|
| * All numbers should be multiplied by 10⁻² | | |

It can be seen that the container prepared from a laminate of the present invention provides a complete hermetic barrier to the transport of oxygen.

The specially selected abuse resistant polymer constituents such as the polyamide type polymers which make up the container are resilient enough to prevent any type of cutting, pinholing, or other damage caused during the converting, carton formation and distribution steps. In addition, the container utilizes ionomer type resins as caulking material for the channels and seams.

The mechanically stable structural substrate may consist of a paper or paperboard material, a corrugated type board material or a stiff polymer resin material such as high density polyethylene, polypropylene or the like.

The barrier layer may consist of an aluminum foil, an ethylene vinyl alcohol copolymer, a polyvinyl alcohol polymer, a polyethylene terephthalate, a polybutylene terephthalate, a glycol-modified polyethylene terephthalate, an acid-modified polyethylene terephthalate, a vinylidene chloride copolymer, a polyvinyl chloride polymer, a vinyl chloride copolymer, a polyamide polymer or a polyamide copolymer, or combinations of these materials.

The preferred embodiments of the present invention utilize an aluminum foil layer as the primary absolute oxygen and flavor oil barrier material. All of the above-identified materials could be utilized in all alternate embodiments in place of the foil layer as well as in the preferred embodiment of the invention. The barrier and high strength layers may be applied as film laminations and/or as extrusion coatings.

The invention may be used in materials for all types of blank fed or web fed package forming equipment. The effectiveness of the laminate of the present invention as an oxygen impermeable package structure permits a significant extension of shelf-life of the products packaged in the containers.

The tough, high strength, abuse resistant type materials can be selected from the following group of polymers: polyamide type polymers such as the preferred Nylon 6, or Nylon 6/66, Nylon 6/12, Nylon 6/9, Nylon 6/10, Nylon 11, Nylon 12; polyethylene terephthalate; polybutylene terephthalate; and ethylene vinyl alcohol copolymers; or other similar tough, high strength polymeric materials which have tensile strengths of 700 Kg/sq.cm (10,000 psi) or greater at conventional heat-seal temperatures 121°C - 260°C (250°F-500°F).

In addition, the high strength, low viscosity caulking resins preferred are selected from the following group of polymers: ionomer type resins, such as the preferred zinc or sodium salts of ethylene methacrylic acid (Surlyn® 1652 or the like); ethylene acrylic acid copolymers; ethylene methacrylic acid copolymers; ethylene vinyl acetate copolymers; ethylene methylacrylate copolymers; and the like, all exhibiting melt flow indexes ranging from 4.5 - 14.0.

Adhesive tie layers preferred are selected from the following: Plexars® from Quantum Chemical Co.; CXA's® from Dupont; Admer's® from Mitsui, and similar performing tie resins.

Additional abuse resistant polymers, caulking polymer resins, mechanically stable structural substrates, oxygen barrier materials, and adhesive tie layers which meet the specifications and requirements outlined above could also be utilized to practice the present invention.

This invention provides a means of transforming the economical, high volume, gable top or flat top paperboard or non-paperboard food/non-food carton into an oxygen impermeable, leak free package that can be produced, sold, and filled economically at high production speeds, offering a low-cost hermetic packaging alternative to glass and metal, with the bulk of one embodiment of the package being biodegradable paperboard from a renewable resource.

## Claims

1. A laminate structure for producing an oxygen impermeable leak free container characterized by the fact that it comprises:
(a) a mechanically stable structural substrate (12) having a first surface and a second surface opposite to said first surface;
(b) a layer (10) of a heat-sealable low density polyethylene polymer coated on said first surface of said mechanically stable structural substrate;
(c)
1) a coextruded layer of a polymer (14) which exhibits a tensile strength of at least 700 kg/sq.cm (10,000 p.s.i.) at conventional heat seal temperatures of 121°C-260°C, abuse resistance and toughness and
2) a caulking polymer resin layer (16),
the layer (c) being bonded to said second surface of said mechanically stable structural substrate;
(d) an oxygen barrier layer (18) in contact with said layer c); and
(e) a layer of low density polyethylene (22) in contact with said layer (d) and said layer (e) is heat-sealable with layer (10) of low density polyethylene polymer of the laminate, on conventional extrusion equipment at temperatures ranging from 121°C-260°C (250°F to 500°F) and is in contact with the product inserted in said container.

2. The laminate according to claim 1, characterized by the fact that said polymer (14) in said coextruded layer (c) is a member selected from the group consisting of polyamide polymers, polyethylene terephthalate, polybutylene terephthalate and ethylene vinyl alcohol copolymer.

3. The laminate structure according to claim 1 which additionally comprises a second layer (20) of a caulking polymer resin between said oxygen barrier layer (d) and said layer (22) of low density polyethylene.

4. A laminate structure for producing an oxygen impermeable leak free container characterized by the fact that it consists of:
(a) a mechanically stable structural substrate (50), having a first and a second surface opposite to said first surface;
(b) a layer (48) of a heat-sealable low density polyethylene polymer coated on said first surface of said mechanically stable structural substrate;
(c) a coextruded layer of
1) a polymer (52) which exhibits a tensile strength of at least 700 kg/sq.cm (10,000 p.s.i.) at conventional heat seal temperatures of 121°C-260°C, abuse resistance and toughness and
2) a caulking polymer resin (54) which is selected from the group consisting of zinc salts of ethylene methacrylic acid copolymers, sodium salts of ethylene methacrylic acid copolymers, ethylene acrylic acid copolymers, ethylene methacrylic acid copolymers and ethylene vinyl acetate copolymers,
said coextruded layer (c) being bonded to the second surface of said substrate (a);
(d) a coextruded layer of
1) a tie layer (56);
2) an oxygen barrier layer (58); and
3) a second tie layer (60),
said layer (d) having a first surface bonded to said layer (c) and a second surface;
(e) a caulking polymer resin (62) which is selected from the group consisting of zinc salts of ethylene methacrylic acid copolymers, sodium salts of ethylene methacrylic acid copolymers, ethylene acrylic acid copolymers, ethylene methacrylic acid copolymers, and ethylene vinyl acetate copolymers,
said layer (e) being in contact with the second surface of said layer (d); and
(f) a layer (64) of low density polyethylene in contact with said layer (e), said layer (64) is heat-sealable with the outer layer of low density polyethylene polymer of the laminate, on conventional extrusion equipment at temperatures ranging from 121°C-260°C (250°F to 500°F), and is in contact with the product inserted in said container.

5. The laminate structure according to claim 4 characterized by the fact that said polymer (52) in said coextruded layer (c) is a member selected from the group consisting of polyamide polymers, polyethylene terephthalate, polybutylene terephthalate and ethylene vinyl alcohol copolymer.

6. A laminate structure for producing an oxygen impermeable leak free container characterized by the fact that it consists of:
(a) a mechanically stable structural substrate (26) having a first surface and a second surface opposite to said first surface;
(b) a layer (24) of a heat-sealable low density polyethylene polymer coated on said first surface of said mechanically stable structural substrate;
(c) a caulking polymer resin (28) having a first surface bonded to said second surface of said mechanically stable structural substrate and having a second surface;
(d) an oxygen barrier material layer (30) having a surface bonded to said second surface of said caulking polymer resin (c) and having an opposite surface;
(e) a first coextruded layer of a second caulking polymer resin (32) and a low density polyethylene polymer (34) coated on said opposite surface of said oxygen barrier, said first coextruded layer (e) having a first surface in contact with said oxygen barrier layer (30) and an opposite surface;
(f) a second coextruded layer of: a first layer of a low density polyethylene polymer (36), a first adhesive tie layer (38), a layer of an ethylene vinyl alcohol copolymer (40), a second adhesive tie layer (42), and a second layer of a low density polyethylene polymer (44), all coated in the above-listed sequence onto said opposite surface of said layer (e), said layer (f) having a first surface in contact with said layer (e) and an opposite surface;
(g) a layer (46) of low density polyethylene polymer in contact with said opposite surface of said second coextruded layer (f), said layer (46) is heat-sealable with the outer layer of low density polyethylene polymer of the laminate, on conventional extrusion equipment at temperatures ranging from 121°C-260°C (250°F to 500°F), said layer (g) being in contact with the product inserted in said container.

7. A laminate structure for producing an oxygen impermeable leak free container characterized by the fact that it consists of
(a) a mechanically stable structural substrate (68) having a first surface and a second surface opposite to said first
(b) an outer layer (66) of a heat-sealable low density polyethylene polymer coated on said first surface of said mechanically stable structural substrate;
(c) a coextruded layer of a low density polyethylene polymer layer (70), an abuse resistant polymer resin (71) which exhibits a tensile strength of at least 700 kg/sq.cm (10,000 p.s.i.) at conventional heat seal temperatures of 121°C-260°C, a first adhesive tie layer (72), an oxygen barrier material layer (74), a second adhesive tie layer (76) and a caulking polymer resin (78), all coextruded on the second surface of said mechanically stable structural substrate (a) and having a first surface in contact with said mechanically stable structural substrate and an opposite surface;
(d) a layer (80) of low density polyethylene polymer in contact with said opposite surface of layer (c), said layer (80) is heat-sealable with the layer (66) of low density polyethylene polymer of the laminate on conventional extrusion equipment at temperatures ranging from 121°C-260°C (250°F to 500°F) and said layer (d) is in contact with the product inserted in said container.

8. The laminate structure according to claim 7 characterized by the fact that said polymer resin (71) in said coextruded layer (c) is a member selected from the group consisting of polyamide polymers, polyethylene terephthalate, polybutylene terephthalate and ethylene vinyl alcohol copolymer.

9. A laminate structure for producing an oxygen impermeable leak free container characterized by the fact that it consists of:
(a) a mechanically stable structural substrate (84) having a first surface and a second surface opposite to said first surface;
(b) a layer (82) of a heat-sealable low density polyethylene polymer coated on said first surface of said mechanically stable structural substrate;
(c) a caulking polymer resin layer (86) having a first surface in contact with the second surface of said substrate (a) and having an opposite surface;
(d) an oxygen barrier layer (88) having a first surface in contact with said opposite surface of layer (c), said oxygen barrier layer having a second surface;
(e) a coextruded layer of a first adhesive tie layer (90), an abuse resistant polymer (92) which has a tensile strength of at least 700 kg/sq.cm (10,000 p.s.i.) at conventional heat seal temperatures of 121°C-260°C and a second adhesive tie layer (94), coated in the listed sequence on said second surface of said layer of said oxygen barrier material (d); and
(f) a layer (96) of low density polyethylene polymer bonded to said layer (e), said layer (96) is heat-sealable with the outer layer of low density polyethylene polymer of the laminate on conventional extrusion equipment at temperatures ranging from 121°C-260°C (250°F to 500°F), and said layer (f) is in contact with the product inserted in said container.

10. The laminate according to claim 9 wherein said abuse-resistant polymer (92) is a member selected from the group consisting of polyamide polymers, polyethylene terephthalate, polybutylene terephthalate and ethylene vinyl alcohol copolymer.

11. The laminate structure according to claims 1, 3, 6, 7 or 9 wherein said caulking polymer resin is a member selected from the group consisting of zinc salts of ethylene methacrylic acid copolymers, sodium salts of ethylene methacrylic acid copolymers, ethylene acrylic acid copolymers, ethylene methacrylic acid copolymers, ethylene vinyl acetate copolymers, and ethylene methacrylate copolymers.

12. The laminate structure according to any one of the preceding claims wherein said mechanically stable structural substrate is a member selected from the group consisting of bleached paperboard, unbleached paperboard, corrugated board, high density polyethylene and polypropylene.

13. The laminate structure according to any one of the preceding claims wherein said oxygen barrier material layer is selected from the group consisting of aluminum foil, polyvinyl alcohol, polyethylene terephthalate, glycol-modified polyethylene terephthalate, acid-modified polyethylene terephthalate, polybutylene terephthalate, vinylidene chloride copolymers, polyvinyl chloride polymer, vinyl chloride copolymers, polyamide polymer and polyamide copolymers.

14. The container according to claims 4, 6, 7 or 9 characterized by the fact that said tie layer is an ethylene based copolymer with grafted functional groups, a modified polyethylene resin containing vinyl acetate acrylate, or polyethylene copolymer based materials with grafted functional groups.

## Patentansprüche

1. Laminatstruktur zur Herstellung eines sauerstoffundurchlässigen, leckfreien Behälters, dadurch gekennzeichnet, daß sie folgendes umfaßt:
(a) ein mechanisch stabiles strukturgebendes Substrat (12), das eine erste Oberfläche und der ersten Oberfläche gegenüber eine zweite Oberfläche aufweist;
(b) eine Schicht (10) eines heißsiegelbaren Hochdruckpolyethylenpolymers, die auf die erste Oberfläche des mechanisch stabilen strukturgebenden Substrats aufgetragen ist;
(c)
1) eine coextrudierte Schicht eines Polymers (14), das eine Zugfestigkeit von mindestens 700 kg/cm² (10.000 psi) bei den herkömmlichen Heißsiegeltemperaturen von 121°-260°C, Verschleißfestigkeit und Widerstandsfähigkeit aufweist, und
2) eine Schicht (16) eines Abdichtungspolymerharzes,
wobei die Schicht (c) auf die zweite Oberfläche des mechanisch stabilen strukturgebenden Substrats aufgeklebt ist;
(d) eine mit der Schicht (c) in Kontakt stehende Sauerstoffsperrschicht (18); und
(e) eine mit der Schicht (d) in Kontakt stehende Schicht Hochdruckpolyethylen (22), und die Schicht (e) mit der Schicht Hochdruckpolyethylenpolymer (10) des Laminats auf einer herkömmlichen Extrusionseinrichtung bei Temperaturen von 121°C-260°C (250°F bis 500°F) heißversiegelt werden kann und mit dem in den Behälter gegebenen Produkt in Kontakt steht.

2. Laminat nach Anspruch 1, dadurch gekennzeichnet, daß das Polymer (14) in der coextrudierten Schicht (c) aus der Gruppe ausgewählt ist, die aus Polyamidpolymeren, Polyethylenterephthalat, Polybutylenterephthalat und Ethylen/Vinylalkohol-Copolymer besteht.

3. Laminatstruktur nach Anspruch 1, die zusätzlich eine zweite Schicht (20) eines Abdichtungspolymerharzes zwischen der Sauerstoffsperrschicht (d) und der Schicht Hochdruckpolyethylen (22) umfaßt.

4. Laminatstruktur zur Herstellung eines sauerstoffundurchlässigen, leckfreien Behälters, dadurch gekennzeichnet, daß sie aus folgendem besteht:
(a) einem mechanisch stabilen strukturgebenden Substrat (50), das eine erste und der ersten gegenüber eine zweite Oberfläche aufweist;
(b) einer Schicht (48) eines heißsiegelbaren Hochdruckpolyethylenpolymers, die auf die erste Oberfläche des mechanisch stabilen strukturgebenden Substrats aufgetragen ist;
(c) einer coextrudierten Schicht
1) eines Polymers (52), das eine Zugfestigkeit von mindestens 700 kg/cm² (10.000 psi) bei den herkömmlichen Heißsiegeltemperaturen von 121°-260°C, Verschleißfestigkeit und Widerstandsfähigkeit aufweist, und
2) eines Abdichtungspolymerharzes (54), das aus der Gruppe ausgewählt ist, die aus Zinksalzen von Ethylen/Methacrylsäure-Copolymeren, Natriumsalzen von Ethylen/Methacrylsäure-Copolymeren, Ethylen/Acrylsäure-Copolymeren, Ethylen/Methacrylsäure-Copolymeren und Ethylen/Vinylacetat-Copolymeren besteht,
wobei die coextrudierte Schicht (c) auf die zweite Oberfläche des Substrats (a) aufgeklebt ist;
(d) einer coextrudierten Schicht aus
1) einer Haftschicht (56);
2) einer Sauerstoffsperrschicht (58); und
3) einer zweiten Haftschicht (60),
wobei die Schicht (d) eine auf die Schicht (c) aufgeklebte erste Oberfläche und eine zweite Oberfläche aufweist;
(e) einem Abdichtungspolymerharz (62), das aus der Gruppe ausgewählt ist, die aus Zinksalzen von Ethylen/Methacrylsäure-Copolymeren, Natriumsalzen von Ethylen/Methacrylsäure-Copolymeren, Ethylen/Acrylsäure-Copolymeren, Ethylen/Methacrylsäure-Copolymeren und Ethylen/Vinylacetat-Copolymeren besteht,
wobei die Schicht (e) mit der zweiten Oberfläche der Schicht (d) in Kontakt steht; und
(f) einer Schicht Hochdruckpolyethylen (64), die mit der Schicht (e) in Kontakt steht, wobei die Schicht (64) mit der äußeren Schicht Hochdruckpolyethylenpolymer des Laminats auf einer herkömmlichen Extrusionseinrichtung bei Temperaturen von 121°C-260°C (250°F bis 500°F) heißversiegelt werden kann und mit dem in den Behälter gegebenen Produkt in Kontakt steht.

5. Laminatstruktur nach Anspruch 4, dadurch gekennzeichnet, daß das Polymer (52) in der coextrudierten Schicht (c) aus der Gruppe ausgewählt ist, die aus Polyamidpolymeren, Polyethylenterephthalat, Polybutylenterephthalat und Ethylen/Vinylalkohol-Copolymer besteht.

6. Laminatstruktur zur Herstellung eines sauerstoffundurchlässigen, leckfreien Behälters, dadurch gekennzeichnet, daß sie aus folgendem besteht:
(a) einem mechanisch stabilen strukturgebenden Substrat (26), das eine erste Oberfläche und der ersten Oberfläche gegenüber eine zweite Oberfläche aufweist;
(b) einer Schicht (24) eines heißsiegelbaren Hochdruckpolyethylenpolymers, die auf die erste Oberfläche des mechanisch stabilen strukturgegebenden Substrats aufgetragen ist;
(c) einem Abdichtungspolymerharz (28), das eine erste auf die zweite Oberfläche des mechanisch stabilen strukturgebenden Substrats aufgeklebte Oberfläche und eine zweite Oberfläche aufweist;
(d) einer Schicht Sauerstoffsperrmaterial (30), die eine auf die zweite Oberfläche des Abdichtungspolymerharzes (c) aufgeklebte Oberfläche und eine gegenüberliegende Oberfläche aufweist;
(e) einer ersten coextrudierten Schicht eines zweiten Abdichtungspolymerharzes (32) und eines Hochdruckpolyethylenpolymers (34), die auf die gegenüberliegende Oberfläche der Sauerstoffsperre aufgetragen ist, wobei die erste coextrudierte Schicht (e) eine mit der Sauerstoffsperrschicht (30) in Kontakt stehende erste und eine gegenüberliegende Oberfläche aufweist;
(f) einer zweiten coextrudierten Schicht aus: einer ersten Schicht Hochdruckpolyethylenpolymer (36), einer ersten Klebstoffhaftschicht (38), einer Schicht aus einem Ethylen/Vinylalkohol-Copolymer (40), einer zweiten Klebstoffhaftschicht (42), und einer zweiten Schicht (44) eines Hochdruckpolyethylenpolymers, die alle in der oben angegebenen Reihenfolge auf die gegenüberliegende Oberfläche der Schicht (e) aufgetragen sind, wobei die Schicht (f) eine mit der Schicht (e) in Kontakt stehende erste und eine gegenüberliegende Oberfläche aufweist;
(g) einer Schicht Hochdruckpolyethylenpolymer (46), die mit der gegenüberliegenden Oberfläche der zweiten coextrudierten Schicht (f) in Kontakt steht, wobei die Schicht (46) mit der äußeren Schicht Hochdruckpolyethylenpolymer des Laminats auf einer herkömmlichen Extrusionseinrichtung bei Temperaturen von 121°C-260°C (250°F bis 500°F) heißversiegelt werden kann, wobei die Schicht (g) mit dem in den Behälter gegebenen Produkt in Kontakt steht.

7. Laminatstruktur zur Herstellung eines Sauerstoffundurchlässigen, leckfreien Behälters, dadurch gekennzeichnet, daß sie aus folgendem besteht:
(a) einem mechanisch stabilen strukturgebenden Substrat (68), das eine erste Oberfläche und der ersten Oberfläche gegenüber eine zweite Oberfläche aufweist;
(b) einer äußeren Schicht (66) eines heißsiegelbaren Hochdruckpolyethylenpolymers, die auf die erste Oberfläche des mechanisch stabilen strukturgegebenden Substrats aufgetragen ist;
(c) einer coextrudierten Schicht aus einer Hochdruckpolyethylenpolymerschicht (70), einem verschleißfesten Polymerharz (71), das eine Zugfestigkeit von mindestens 700 kg/cm² (10.000 psi) bei den herkömmlichen Heißsiegeltemperaturen von 121°C-260°C aufweist, einer ersten Klebstoffhaftschicht (72), einer Schicht Sauerstoffsperrmaterial (74), einer zweiten Klebstoffhaftschicht (76) und einem Abdichtungspolymerharz (78), die alle auf die zweite Oberfläche des mechanisch stabilen strukturgebenden Substrats (a) coextrudiert sind, und die eine erste mit dem mechanisch stabilen strukturgebenden Substrat in Kontakt stehende und eine gegenüberliegende Oberfläche aufweisen;
(d) einer Schicht Hochdruckpolyethylenpolymer (80), die mit der gegenüberliegenden Oberfläche der Schicht (c) in Kontakt steht, wobei die Schicht (80) mit der Schicht Hochdruckpolyethylenpolymer (66) des Laminats auf einer herkömmlichen Extrusionseinrichtung bei Temperaturen von 121°C-260°C (250°F bis 500°F) heißversiegelt werden kann und die Schicht (d) mit dem in den Behälter gegebenen Produkt in Kontakt steht.

8. Laminatstruktur nach Anspruch 7, dadurch gekennzeichnet, daß das Polymerharz (71) in der coextrudierten Schicht (c) aus der Gruppe ausgewählt ist, die aus Polyamidpolymeren, Polyethylenterephthalat, Polybutylenterephthalat und Ethylen/Vinylalkohol-Copolymer besteht.

9. Laminatstruktur zur Herstellung eines sauerstoffundurchlässigen, leckfreien Behälters, dadurch gekennzeichnet, daß sie aus folgendem besteht:
(a) einem mechanisch stabilen strukturgebenden Substrat (84), das eine erste Oberfläche und der ersten Oberfläche gegenüber eine zweite Oberfläche aufweist;
(b) einer Schicht (82) eines heißsiegelbaren Hochdruckpolyethylenpolymers, die auf die erste Oberfläche des mechanisch stabilen strukturgebenden Substrats aufgetragen ist;
(c) einer Schicht eines Abdichtungspolymerharzes (86), die eine erste mit der zweiten Oberfläche des Substrats (a) in Kontakt stehende und eine gegenüberliegende Oberfläche aufweist;
(d) einer Sauerstoffsperrschicht (88), die eine erste mit der gegenüberliegenden Oberfläche der Schicht (c) in Kontakt stehende Oberfläche aufweist, wobei die Sauerstoffsperrschicht eine zweite Oberfläche aufweist;
(e) einer coextrudierten Schicht aus einer ersten Klebstoffhaftschicht (90), einem verschleißfesten Polymer (92), das eine Zugfestigkeit von mindestens 700 kg/cm² (10.000 psi) bei den herkömmlichen Heißsiegeltemperaturen von 121°C-260°C aufweist, und einer zweiten Klebstoffhaftschicht (94), die in der angegebenen Reihenfolge auf die zweite Oberfläche der Schicht Sauerstoffsperrmaterial (d) aufgetragen sind; und
(f) einer auf die Schicht (e) aufgeklebten Schicht Hochdruckpolyethylenpolymer (96), wobei die Schicht (96) mit der äußeren Schicht Hochdruckpolyethylenpolymer des Laminats auf einer herkömmlichen Extrusionseinrichtung bei Temperaturen von 121°C-260°C (250°F bis 500°F) heißversiegelt werden kann, und die Schicht (f) mit dem in den Behälter gegebenen Produkt in Kontakt steht.

10. Laminat nach Anspruch 9, bei dem das verschleißfeste Polymer (92) aus der Gruppe ausgewählt ist, die aus Polyamidpolymeren, Polyethylenterephthalat, Polybutylenterephthalat und Ethylen/Vinylalkohol-Copolymer besteht.

11. Laminatstruktur nach Ansprüchen 1, 3, 6, 7 oder 9, bei der das Abdichtungspolymerharz aus der Gruppe ausgewählt ist, die aus Zinksalzen von Ethylen/Methacrylsäure-Copolymeren, Natriumsalzen von Ethylen/Methacrylsäure-Copolymeren, Ethylen/Acrylsäure-Copolymeren, Ethylen/Methacrylsäure-Copolymeren, Ethylen/Vinylacetat-Copolymeren und Ethylen/Methacrylat-Copolymeren besteht.

12. Laminatstruktur nach einem der vorgehenden Ansprüche, in der das mechanisch stabile strukturgebende Substrat aus der Gruppe ausgewählt ist, die aus gebleichtem Karton, ungebleichtem Karton, Wellkarton, Niederdruckpolyethylen und Polypropylen besteht.

13. Laminatstruktur nach einem der vorhergehenden Ansprüche, in der die Sauerstoffsperrmaterialschicht aus der Gruppe ausgewählt ist, die aus Aluminiumfolie, Polyvinylalkohol, Polyethylenterephthalat, mit Glycol modifiziertem Polyethylenterephthalat, säuremodifiziertem Polyethylenterephthalat, Polybutylenterephthalat, Vinylidenchlorid-Copolymerisaten, Polyvinylchlorid-Polymer, Vinylchlorid-Copolymerisaten, Polyamidpolymer und Polyamid-Copolymerisaten besteht.

14. Behälter nach den Ansprüchen 4, 6, 7 oder 9, dadurch gekennzeichnet, daß die Haftschicht aus einem Copolymerisat auf der Basis von Ethylen mit aufgepfropften funktionellen Gruppen, einem Vinylacetat-Acrylat enthaltenden modifizierten Polyethylenharz oder einem Material auf der Basis von Polyethylen-Copolymerisat mit aufgepfropften funktionellen Gruppen besteht.

## Revendications

1. Structure stratifiée pour produire un conteneur imperméable à l'oxygène et étanche contre les fuites, caractérisée en ce qu'elle comprend :
(a) un support structural mécaniquement stable (12) possédant une première surface et une seconde surface opposée à ladite première surface ;
(b) une couche (10) de polymère polyéthylène basse densité thermo-soudable posée sur ladite première surface dudit support structural mécaniquement stable ;
(c)
1) une couche produite par co-extrusion d'un polymère (14) qui présente une résistance à la rupture par traction d'au moins 700 kg/cm² (10.000 psi) à des températures de thermosoudage conventionnelles de 121°C-260°C, une résistance aux et une robustesse contre les abus et
2) une couche de résine polymère donnant l'étanchéité (16),
la couche (c) étant liée à ladite seconde surface dudit support structural mécaniquement stable ;
(d) une couche (18) formant une barrière contre l'oxygène en contact avec ladite couche c) ; et
(e) une couche de polyéthylène (22) basse densité en contact avec ladite couche (d), ladite couche (e) est thermo-soudable avec la couche (10) de polymère polyéthylène basse densité du stratifié, sur un équipement d'extrusion conventionnel à des températures allant de 121°C-260°C (250°F à 500°F) et est en contact avec le produit introduit dans ledit conteneur.

2. Stratifié selon la revendication 1, caractérisé en ce que ledit polymère (14) dans ladite couche produite par co-extrusion (c) est un membre sélectionné parmi le groupe composé des polymères polyamides, du polyéthylène-téréphtalate, du polybutylène-téréphtalate et de copolymère éthylène/alcool vinylique.

3. Structure stratifiée selon la revendication 1, qui comprend en outre une seconde couche (20) de résine polymère donnant l'étanchéité, située entre ladite couche (d) formant une barrière contre l'oxygène et ladite couche (22) de polyéthylène basse densité.

4. Structure stratifiée pour produire un conteneur imperméable à l'oxygène et étanche contre les fuites, caractérisée en ce qu'elle comprend :
(a) un support structural mécaniquement stable (50) possédant une première surface et une seconde surface opposée à ladite première surface ;
(b) une couche (48) de polymère polyéthylène basse densité thermo-soudable posée sur ladite première surface dudit support structural mécaniquement stable ;
(c) une couche produite par co-extrusion formée par
1) d'un polymère (52) qui présente une résistance à la rupture par traction d'au moins 700 kg/cm² (10.000 psi) à des températures de thermosoudage conventionnelles de 121°C-260°C, une résistance aux et une robustesse contre les abus et
2) une couche de résine polymère donnant l'étanchéité (54) qui est sélectionnée parmi le groupe comprenant les sels de zinc de copolymères éthylène/acide méthacrylique, les sels de sodium de copolymères éthylène/acide méthacrylique, de copolymères éthylène/acide acrylique, de copolymères éthylène/acide méthacrylique et de copolymères éthylène/acétate de vinyl,
ladite couche (c) étant liée à la seconde surface dudit support (a) ;
(d) une couche produite par co-extrusion formée par
1) une couche de jonction (56) ;
2) une couche (58) formant une barrière contre l'oxygène (58), et
3) une seconde couche de jonction (60),
ladite couche (d) possédant une première surface liée à ladite couche (c) et une seconde surface ;
(e) une résine polymère donnant l'étanchéité (62) qui est sélectionnée parmi le groupe comprenant les sels de zinc de copolymères éthylène/acide méthacrylique, les sels de sodium de copolymères éthylène/acide méthacrylique, de copolymères éthylène/acide acrylique, de copolymères éthylène/acide méthacrylique et de copolymères éthylène/acétate de vinyl,
ladite couche (e) étant en contact avec la seconde surface de ladite couche (d) ; et
(f) une couche (64) de polyéthylène basse densité en contact avec ladite couche (e), ladite couche (64) est thermo-soudable avec la couche extérieure de polymère polyéthylène basse densité du stratifié, sur un équipement d'extrusion conventionnel à des températures allant de 121°C-260°C (250°F à 500°F) et est en contact avec le produit introduit dans ledit conteneur.

5. Structure stratifiée selon la revendication 4, caractérisée en ce que ledit polymère (52) dans ladite couche produite par co-extrusion (c) est un membre sélectionné parmi le groupe composé des polymères polyamides, du polyéthylène-téréphtalate, du polybutylène-téréphtalate et de copolymère éthylène/alcool vinylique.

6. Structure stratifiée pour produire un conteneur imperméable à l'oxygène et étanche contre les fuites, caractérisée en ce qu'elle comprend :
(a) un support structural mécaniquement stable (26) possédant une première surface et une seconde surface opposée à ladite première surface ;
(b) une couche (24) de polymère polyéthylène basse densité thermo-soudable posée sur ladite première surface dudit support structural mécaniquement stable ;
(c) une couche de résine polymère donnant l'étanchéité (28) ayant une première surface liée à ladite seconde surface dudit support structural mécaniquement stable et ayant une seconde surface ;
(d) une couche (30) de matière formant une barrière contre l'oxygène ayant une surface liée à ladite seconde surface de ladite résine polymère donnant l'étanchéité (c) et ayant une surface opposée ;
(e) une première couche produite par co-extrusion d'une seconde résine polymère donnant l'étanchéité (32) et un polymère polyéthylène basse densité (34) posée sur ladite surface opposée de ladite barrière contre l'oxygène, ladite première couche (e) produite par co-extrusion ayant une première surface en contact avec ladite couche (30) formant une barrière contre l'oxygène et une surface opposée ;
(f) une seconde couche produite par co-extrusion formée par : une première couche de polymère polyéthylène basse densité (36), une première couche de jonction adhésive (38), une couche de copolymère (40) éthylène/alcool vinylique, une seconde couche de jonction adhésive (42), et une seconde couche de polymère polyéthylène basse densité (44), toutes posées selon la séquence susmentionnée sur ladite surface opposée de ladite couche (e), ladite couche (f) ayant une première surface en contact avec ladite couche (e) et une surface opposée ;
(g) une couche (46) de polymère polyéthylène basse densité en contact avec ladite surface opposée de ladite seconde couche (f) produite par co-extrusion, ladite couche (46) est thermosoudable avec la couche extérieure de polymère polyéthylène basse densité du stratifié, sur un équipement d'extrusion conventionnel à des températures allant de 121°C-260°C (250°F à 500°F), ladite couche (g) étant en contact avec le produit introduit dans ledit conteneur.

7. Structure stratifiée pour produire un conteneur imperméable à l'oxygène et étanche contre les fuites, caractérisée en ce qu'elle comprend :
(a) un support structural mécaniquement stable (68) possédant une première surface et une seconde surface opposée à ladite première surface ;
(b) une couche extérieure (66) de polymère polyéthylène basse densité thermo-soudable posée sur ladite première surface dudit support structural mécaniquement stable ;
(c) une couche produite par co-extrusion d'une couche (70) de polymère polyéthylène basse densité, une résine polymère (71) résistante aux abus qui présente une résistance à la rupture par traction d'au moins 700 kg/cm² (10.000 psi) à des températures de thermosoudage conventionnelles de 121°C-260°C, une première couche de jonction adhésive (72), une couche (74) de matière formant une barrière contre l'oxygène, une seconde couche de jonction adhésive (76) et une résine polymère donnant l'étanchéité (78), toutes produites par co-extrusion sur la seconde surface dudit support structural mécaniquement stable (a) et possédant une première surface en contact avec ledit support structural mécaniquement stable et une surface opposée ;
(d) une couche (80) de polymère polyéthylène basse densité en contact avec ladite surface opposée de la couche (c), ladite couche (80) est thermo-soudable avec la couche (66) de polymère polyéthylène basse densité du stratifié sur un équipement d'extrusion conventionnel à des températures allant de 121°C-260°C (250°F à 500°F) et ladite couche (d) est en contact avec le produit introduit dans ledit conteneur.

8. Structure stratifiée selon la revendication 7, caractérisée en ce que ladite résine polymère (71) dans ladite couche produite par co-extrusion (c) est un membre sélectionné parmi le groupe composé des polymères polyamides, du polyéthylène-téréphtalate, du polybutylène-téréphtalate et de copolymère éthylène/alcool vinylique.

9. Structure stratifiée pour produire un conteneur imperméable à l'oxygène et étanche contre les fuites, caractérisée par le fait qu'elle comprend :
(a) un support structural mécaniquement stable (84) possédant une première surface et une seconde surface opposée à ladite première surface ;
(b) une couche (82) de polymère polyéthylène basse densité thermo-soudable posée sur ladite première surface dudit support structural mécaniquement stable ;
(c) une couche (86) de résine polymère donnant l'étanchéité et ayant une première surface en contact avec la seconde surface dudit support (a) et ayant une surface opposée ;
(d) une couche (88) formant une barrière contre l'oxygène ayant une première surface en contact avec ladite surface opposée de la couche (c), ladite couche formant une barrière contre l'oxygène ayant une seconde surface ;
(e) une couche produite par co-extrusion d'une première couche (90) de jonction adhésive, un polymère (92) résistant aux abus qui présente une résistance à la rupture par traction d'au moins 700 kg/cm² (10.000 psi) à des températures de thermosoudage conventionnelles de 121°C-260°C, et une seconde couche (94) de jonction adhésive, posés selon la séquence énumérée sur ladite seconde surface de ladite couche de ladite matière (d) formant une barrière contre l'oxygène ; et
(f) une couche (96) de polymère polyéthylène basse densité liée à ladite couche (e), ladite couche (96) est thermo-soudable avec la couche extérieure de polymère polyéthylène basse densité du stratifié, sur un équipement d'extrusion conventionnel à des températures allant de 121°C-260°C (250°F à 500°F) et ladite couche (f) est en contact avec le produit introduit dans ledit conteneur.

10. Stratifié selon la revendication 9, dans lequel ledit polymère (92) résistant aux abus est un membre sélectionné parmi le groupe composé des polymères polyamides, du polyéthylène-téréphtalate, du polybutylène-téréphtalate et de copolymère éthylène/alcool vinylique.

11. Structure stratifiée selon les revendications 1, 3, 6, 7 ou 9, dans laquelle ladite résine polymère donnant l'étanchéité est un membre sélectionné parmi le groupe comprenant les sels de zinc de copolymères éthylène/acide méthacrylique, les sels de sodium de copolymères éthylène/acide méthacrylique, de copolymères éthylène/acide acrylique, de copolymères éthylène/acide méthacrylique, de copolymères éthylène/acétate de vinyl et de copolymères éthylène/méthacrylate.

12. Structure stratifiée selon l'une quelconque des revendications précédentes, dans laquelle ledit substrat de structure manifestant une stabilité mécanique est un membre choisi parmi le groupe constitué par du carton blanchi, du carton non blanchi, du carton ondulé, du polyéthylène et du polypropylène haute densité.

13. Structure stratifiée selon l'une quelconque des revendications précédentes, dans laquelle ladite couche de matière arrêtant l'oxygène est choisie parmi le groupe constitué par une feuille mince d'aluminium, l'alcool polyvinylique, le polyéthylène-téréphtalate, le polyéthylène-téréphtalate modifié par un glycol, le polyéthylène-téréphtalate modifié par un acide, le polybutylène-téréphtalate, des copolymères de chlorure de vinylidène, un polymère de chlorure de polyvinyle, des copolymères de chlorure de vinyle, un polymère de polyamide et des copolymères de polyamide.

14. Réceptacle selon les revendications 4, 6, 7 ou 9, caractérisé par le fait que ladite couche de liaison est un copolymère à base d'éthylène contenant des groupes fonctionnels greffés, une résine de polyéthylène modifiée contenant de l'acétate-acrylate de vinyle ou encore des matières à base d'un copolymère de polyéthylène, contenant des groupes fonctionnels greffés.
